# EUROPEAN PATENT APPLICATION

(11) **EP 4 439 807 A1**
(43) Date of publication of application: **02.10.2024**
(21) Application number: 23165383.3
(22) Date of filing: 30.03.2023
(51) Int. Cl.: H01M 50/105, H01M 50/121, H01M 50/129, H01M 50/178, H01M 50/186, H01M 50/193, H01M 50/30, H01M 50/342, H01M 50/375, H01M 50/553, H01M 50/557

(54) **POUCH CELL, IN PARTICULAR POUCH CELL FOR A BATTERY OF ELECTRIC VEHICLES, AND METHOD OF MANUFACTURING SUCH A POUCH CELL**

(71) Applicant: VOLKSWAGEN AG, 38440 Wolfsburg (DE)
(72) Inventor: Choi, Joo Young, 38122 Braunschweig (DE); Song, Sooan, 38100 Braunschweig (DE)

(57) **Abstract**

The invention relates to a pouch cell, in particular a pouch cell for a battery of an electric vehicle, with a soft body, the body consisting of a soft and flexible plastic main material, wherein the plastic main material forms a bag (12) for encapsulating at least one battery cell and wherein the bag (12) has at least one sealing area (30) where the bag (12) was sealed after being filled with the at least one battery cell wherein the sealing area (30) comprises a modified sealing material and/or the sealing area (30) comprises an additional sealing material (32) such that the melting temperature of the sealing bag is reduced in the sealing area (30) compared to the melting temperature of the plastic main material.

## Description

The invention relates to a pouch cell, in particular a pouch cell for a battery of an electric vehicle, i.e. a vehicle being completely or at least partly electrically driven. It is also referred to a battery of an electric vehicle consisting of at least one pouch cell and to an electric vehicle with at least one such battery. Furthermore, the invention relates to a method of manufacturing such a pouch cell.

As the automobile market requires electric vehicles with a long range of driving (more than 500 km), the demand for lithium-ion cells with a high energy density is increasing. To achieve a high energy density in lithium-ion cells, chemical active materials with high capacity (mAh/g) are necessary. Especially at the cathode-side, High Ni-cathode materials such as Lithium nickel manganese cobalt oxides (abbreviated Li-NMC, LNMC, NCM or NMC materials) with an amount of Ni of more than 60% are required.

In some legislations special requirements have to be fulfilled by electric vehicles in case of a short circuit inside a single battery cell, hereinafter also called thermal propagation, thermal event or thermal runaway. One of these requirements is a vehicle system that shall provide a signal to activate the advance warning indication in the vehicle to allow egress or 5 minutes prior to the presence of a hazardous situation inside the passenger compartment caused by thermal propagation which is triggered by an internal short circuit leading to a single cell thermal runaway such as fire, explosion or smoke.

As a consequence of increasing Ni contents in Li-NMC or NCA materials more aging occurs due to structural instability. Additionally safety functions will be weakened due to high oxygen evolution and low on-set temperature. In general, thermal stability with higher Ni content will be worse than with a lower Ni-content.

The invention refers to pouch cells, in particular to Li-ion pouch cells. The pouch cells the invention refers to do not have a solid body, but a soft body. Such Pouch cells usually consist of several cell components being enclosed in a plastic film, in particular in an aluminum-coated plastic film.

CN 114520379 A refers to a battery module comprising a modular frame, a cell housed within the module frame and a liquid cooled device disposed within the module frame. In the described example, the cell is a pouch cell comprising a bare cell and an encapsulation package. When the temperature of bare cell reaches a first preset temperature, the temperature of the package also reaches the first preset temperature to form a notch, the notch serving to allow gas within the package to egress out of the package, achieving a release of pressure inside the package preventing explosion of the cell. In one embodiment the package shall be provided with a piece of fusible material. However, the design configuration of the cell itself is not explained or shown in detail. From the description and the drawings it may be learned that the package seems to be a solid package. Furthermore, the document does not refer to a specific material for the package and does not refer to specific temperatures referring to the fusible material.

The object of the invention is to provide a pouch cell with a soft body, in particular a pouch cell for a battery of an electric vehicle, with an improved functionality in relation to thermal runaways as well as a method of manufacturing such a pouch cell.

The object is solved by the features of the independent claims. Further useful embodiments and advantages of the invention are described in connection with the dependent claims.

An inventive pouch cell comprises a soft body, the body consisting of a soft and flexible plastic main material, wherein the plastic main material forms a bag for encapsulating at least one battery cell, wherein the bag has at least one sealing area where the bag was sealed after being filled with the at least one battery cell. Furthermore, the sealing area comprises a modified sealing material and/or the sealing area comprises an additional sealing material such that the melting temperature of the sealing bag is reduced in the sealing area compared to the melting temperature of the plastic main material. The inventive pouch cell follows the idea to significantly reduce the risk of a thermal propagation by opening the bag significantly earlier thereby allowing the battery cell to vent and thus not to reach the temperature leading to a thermal event such as a thermal propagation. Also, as the temperature in the bag is lower when the bag opens in the sealing area, the risk of a heat transition from one battery cell to another and the resulting thermal event issue on the field is significantly reduced. In particular, the pouch cell and the melting temperature in the sealing area may be configured such that an early intentional venting occurs through the opened sealing area such that a thermal misfunction in one single battery cell will not risk neighbor battery cells to a corresponding thermal misfunction. Thus, thermal events may be prevented by the inventive pouch cell, as a misfunction of one single battery cell will only lead to a gas venting event in one single cell on a battery module level or a battery level.

In a further embodiment of the invention, the plastic main material of an inventive pouch cell comprises a polymer material and the sealing area comprises an additional polymer material being inserted as a thin film between two layers of the plastic main material. Polymer materials, in particular regular polypropylene, are frequently used for the soft body of a pouch cell. If an additional polymer material is being inserted as a thin film between two layers of the plastic main material, known methods of sealing a pouch cell may be applied without changing the manufacturing process, wherein nevertheless an inventive pouch cell results from the process.

If the melting temperature in the sealing area is at least 10 °C lower that the melting temperature of the plastic main material the risk of a thermal misfunction being transferred from one battery cell to a neighbor battery cell is already significantly reduced. However, it is preferred if the melting temperature in the sealing area is at least 15 °C, further preferred more than 20 °C and even more preferred more than 30 °C lower than the melting temperature of the plastic main material.

Speaking in an absolute temperature, the melting temperature in the sealing area of an inventive pouch cells is preferably between 100 °C and 170 °C, more preferred between 110 °C and 150 °C and further preferred between 120 °C and 145 °C.

If the sealing area of an inventive pouch cell comprises an additional material and the additional material is a material comprising one of the following materials:
a) Poly(1-butene), isotactic
   and/or
b) Polyethylene,
the melting temperature is about 124 °C in case a) and about 141 °C in case b). Said materials are preferred, also due to the fact that the sealing method can mainly be carried out as being know from the prior art manufacturing method. However, it is advisable to adapt the temperature and/or the pressure depending on the thickness and the type of the additional material.

The invention also related to a method of manufacturing a pouch cell with a soft body, the body consisting of a soft and flexible plastic main material, wherein the plastic main material forms a bag for encapsulating at least one battery cell and wherein the bag has at least one sealing area where the bag is sealed after being filled with the at least one battery cell, characterized in that the sealing material is modified and/or an additional sealing material is added to the sealing area before sealing the bag such that the melting temperature of the sealing bag is reduced in the sealing area compared to the plastic main material. Concerning further specifications of the pouch cell and the combined advantages of this configuration it is referred to the sections above.

In a further embodiment of the inventive method of manufacturing a pouch cell a polymer material is used as the plastic main material and additional polymer material is inserted as a thin film between two layers of the plastic main material.

In another embodiment of the inventive method of manufacturing a pouch cell the sealing is carried out by at least one sealing bar pressing at least two layers of the plastic main material together thereby applying heat for a defined duration to the modified plastic main material or to the plastic main material and the additional sealing material.

Further useful embodiments of the invention are described in the following in connection with the figures.

It shows:
- Fig. 1: an inventive pouch cell in a side view,
- Fig. 2: the inventive pouch cell of figure 1 in a view according to arrow II in figure 1 and
- Fig. 3: a diagrammatic overview of the inventive method and the effect of the invention in a battery module comprising various inventive pouch cells.

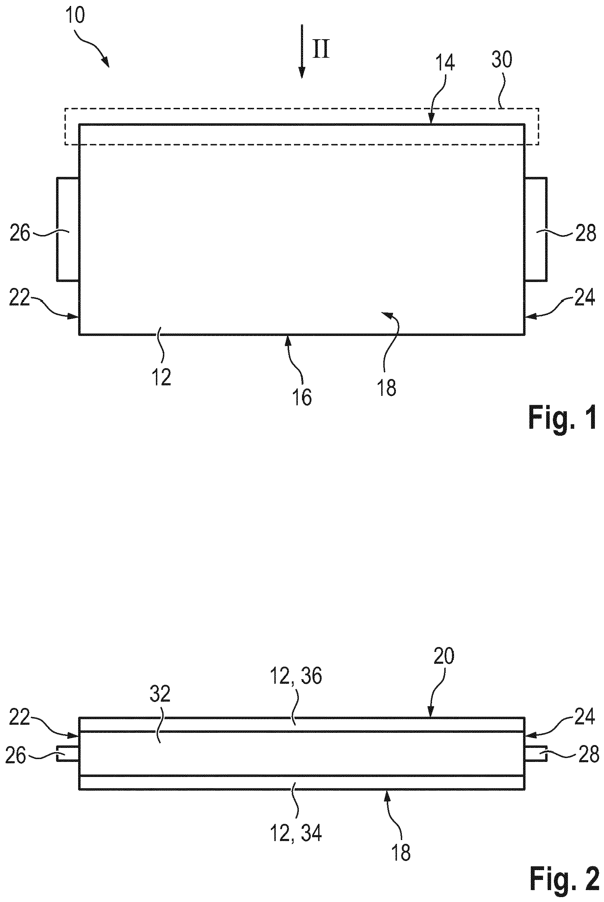

Figures 1 and 2 show an inventive pouch cell 10 in different views. The pouch cell 10 comprises a bag 12 consisting of a soft and flexible plastic main material. In this embodiment the plastic main material is polypropylene. The pouch cell 10 has an upper side 14, a lower side 16, a front side 18, an opposite back side 20 (see figure 2), a left side 22 and a right side 24. Two battery terminals 26, 28 are provided, in this case one on the left side 22 and one on the right side 24.

When the pouch cell 10 is produced, the bag 12 is preprocessed by folding the flexible polypropylene material along the lower side 16 and connecting the material on the left side 22 and on the right side 24. After that, the bag 12 is filled with at least one battery cell and further stuff such as electrolyte. At the end on the upper side 14 a sealing bar (not shown) is applied in the sealing area 30, thereby applying heat causing the bag 12 to be sealed. In this embodiment, and additional material 32 is positioned between a front side layer 34 and a back side layer 36 in the sealing area 30. The additional material 32 is not drawn to scale, but only drawn symbolically. In fact, the additional material 32 and the layers 34, 36 are very thin and preferably flexible and soft materials. In the exemplary embodiment shown in the figures, the additional material 32 is polyethylene.

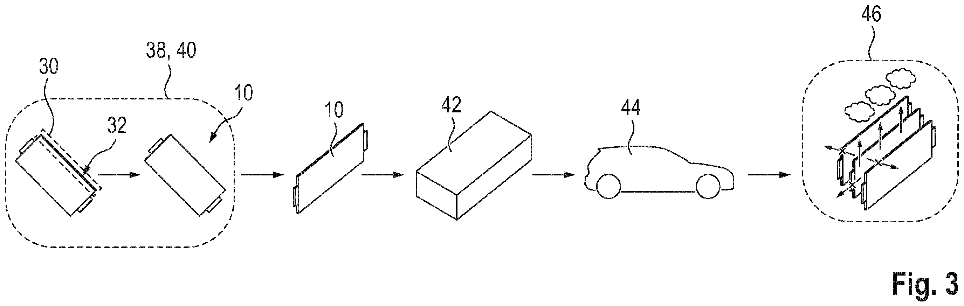

Figure 3 shows how the inventive pouch cell may be used in the vehicle production as well as a diagrammatic representation of an important advantage of the invention.

In the first step 38, the pouch sealing process 40, additional material 32 is added to the sealing area 30 and the pouch cell 10 is sealed, in particular by applying a sealing bar pressing the least two layers 34, 36 of the plastic main material and the additional material 32 (see figure 2) together thereby applying heat and pressure for a defined duration in order to seal the pouch cell 10.

After manufacturing several such pouch cells 10, said pouch cells 10 are used to build a battery (not shown) and therefore may be inserted into a battery module 42 in order to form an electric storage for driving a vehicle 44.

In case of a thermal misfunction, as shown in the thermal misfunction representation 46, due to the inventive pouch cell 10 concept, the upper side 14 of the pouch cell 10 will open at a relatively low temperature, in particular after reaching the melting temperature of the additional material 32. In this case, as the additional material 32 is polyethylene, the melting temperature is 141 °C. Thus, as soon as the inner temperature of a pouch cell 10 where a propagation happens reaches or exceeds 141 °C, the bag 12 of the pouch cell 10 opens at the sealing area 30. Due to this opening at a relatively low temperature, the opened pouch cell 10 is able to vent and the risk for a thermal propagation and a following heating of neighbor pouch cells 10 including a thermal propagation of neighbor pouch cells 10 is reduced to a minimum.

The features of the invention disclosed in the present specification, in the drawings, as well as in the claims may be essential both individually and in any combinations for the realization of the invention in its various embodiments. The invention is not limited to the described embodiments. They can be varied within the scope of the claims and taking into account the knowledge of the competent expert.

### Reference numbers

- 10: pouch cell
- 12: bag
- 14: upper side
- 16: lower side
- 18: front side
- 20: back side
- 22: left side
- 24: right side
- 26: terminal (left)
- 28: terminal (right)
- 30: sealing area
- 32: additional material (symbolically)
- 34: front side layer
- 36: back side layer
- 38: first step
- 40: pouch sealing process
- 42: battery module
- 44: vehicle
- 46: thermal misfunction representation

## Claims

1. Pouch cell with a soft body, the body consisting of a soft and flexible plastic main material, wherein the plastic main material forms a bag (12) for encapsulating at least one battery cell and wherein the bag (12) has at least one sealing area (30) where the bag (12) was sealed after being filled with the at least one battery cell,
**characterized in that**
the sealing area (30) comprises a modified sealing material and/or the sealing area (30) comprises an additional sealing material (32) such that the melting temperature of the sealing bag is reduced in the sealing area (30) compared to the melting temperature of the plastic main material.

2. Pouch cell according to claim 1, **characterized in that** the plastic main material comprises a polymer material and the sealing area (30) comprises an additional polymer material being inserted as a thin film between two layers of the plastic main material.

3. Pouch cell according to one of the preceding claims, **characterized in that** the melting temperature in the sealing area (30) is at least 10 °C lower that the melting temperature of the plastic main material.

4. Pouch cell according to one of the preceding claims, **characterized in that** the melting temperature in the sealing area (30) is between 100 °C and 170 °C.

5. Pouch cell according to one of the preceding claims, **characterized in that** the sealing area (30) comprises an additional material (32) and the additional material (32) is a material comprising one of the following materials:
a) Poly(1-butene), isotactic
and/or
b) Polyethylene,

6. Method of manufacturing a pouch cell (10) with a soft body, the body consisting of a soft and flexible plastic main material, wherein the plastic main material forms a bag (12) for encapsulating at least one battery cell and wherein the bag (12) has at least one sealing area (30) where the bag (12) is sealed after being filled with the at least one battery cell, **characterized in that** the sealing material (30) is modified and/or an additional sealing material (32) is added to the sealing area (30) before sealing the bag (12) such that the melting temperature of the sealing bag is reduced in the sealing area (30) compared to the plastic main material.

7. Method of manufacturing a pouch cell (10) according to the preceding claim **characterized in that** a polymer material is used as the plastic main material and additional polymer material is inserted as a thin film between two layers of the plastic main material.

8. Method of manufacturing a pouch cell (10) according to the preceding claim **characterized in that** the sealing is carried out by at least one sealing bar pressing at least two layers of the plastic main material in the sealing area (30) together thereby applying heat for a defined duration to the modified sealing material and/or to the main plastic material and the additional sealing material (32).
